# EUROPEAN PATENT APPLICATION

(11) **EP 4 542 956 A1**
(43) Date of publication of application: **23.04.2025**
(21) Application number: 23829749.3
(22) Date of filing: 12.05.2023
(51) Int. Cl.: H04L 45/30

(54) **MESSAGE ROUTING METHOD AND APPARATUS, AND SYSTEM**

(30) Priority: 29.06.2022 CN 202210760237
(71) Applicant: ZTE Corporation, Shenzhen, Guangdong 518057 (CN)
(72) Inventor: CAO, Wei, Shenzhen, Guangdong 518057 (CN); DING, Fuhao, Shenzhen, Guangdong 518057 (CN)
(74) Representative: Ziebig Hengelhaupt Intellectual Property Attorneys Patentanwaltskanzlei PartGmbB
(86) International application number: PCT/CN2023/093972
(87) International publication number: WO 2024/001563

(57) **Abstract**

The present disclosure provides a message routing method, a message routing device and a message routing system. The method includes: receiving a service request message and a first routing parameter sent by a first network function (NF), where the first routing parameter carries a network repository function (NRF) discovery parameter and a user identifier, and the first NF resides in a visited public land mobile network (VPLMN); and routing the service request message and the NRF discovery parameter to a home public land mobile network security edge protection proxy (HSEPP) according to the user identifier, so that the HSEPP routes the service request message to a second NF according to the NRF discovery parameter, where the second NF resides in a home public land mobile network (HPLMN).

## Description

### CROSS-REFERENCE TO RELATED APPLICATIONS

This application claims priority to Chinese Patent Application No. CN202210760237.4, filed on June 29, 2022, and entitled "MESSAGE ROUTING METHOD, DEVICE AND SYSTEM", the entire contents of which are incorporated herein by reference.

### TECHNICAL FIELD

The present disclosure relates to the technical field of communication, and in particular, to a message routing method, a message routing device and a message routing system.

### BACKGROUND

In some cases, the networks for roaming between 5G SA (Standalone) Public Land Mobile Network (PLMN) defined by 3GPP include Security Edge Protection Proxy (SEPP), Access and Mobility Management Function (AMF), Unified Data Management (UDM), NF Repository Function (NRF), etc.

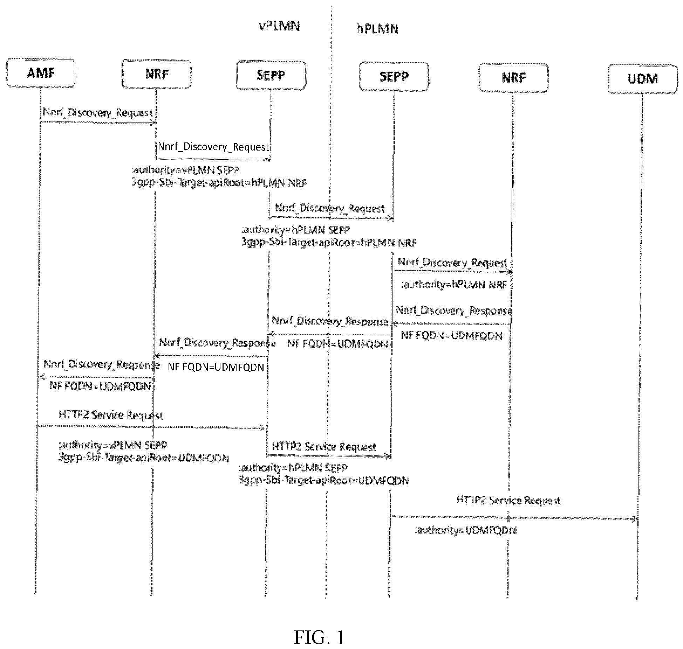

In some cases, SEPP acts as a security edge protection proxy for PLMN and is responsible for forwarding control plane signaling for interaction between PLMNs. Taking a typical Visited Public Land Mobile Network (VPLMN) AMF network element accessing the UDM network element in the Home Public Land Mobile Network (HPLMN) as an example. FIG. 1 is a flowchart of interaction between PLMNs in the related art of the present disclosure. It can be seen from the interaction flow in FIG. 1 that in some cases, there is a technical problem of signaling detour from VPLMN to HPLMN.

### SUMMARY

The present disclosure provides a message routing method, a message routing device and a message routing system to at least solve the technical problem of interactive signaling detour between PLMNs in some situations.

According to an embodiment of the present disclosure, a message routing method is provided, which is applied to a visited public land mobile network security edge protection proxy (VSEPP), including: receiving a service request message and a first routing parameter sent by a first network function (NF), where the first routing parameter carries a network repository function (NRF) discovery parameter and a user identifier, and the first NF resides in a visited public land mobile network (VPLMN); and routing the service request message and the NRF discovery parameter to a home public land mobile network security edge protection proxy (HSEPP) according to the user identifier, so that the HSEPP routes the service request message to a second NF according to the NRF discovery parameter, where the second NF resides in a home public land mobile network (HPLMN).

According to an embodiment of the present disclosure, another message routing method is provided, which is applied to a home public land mobile network security edge protection proxy (HSEPP), including: receiving a service request message and a second routing parameter routed by a visited public land mobile network security edge protection proxy (VSEPP); routing the service request message to a second network function (NF) according to the second routing parameter, where the second NF resides in a home public land mobile network (HPLMN); receiving a response message returned by the second NF based on the service request message; and sending the response message to the VSEPP.

According to another embodiment of the present disclosure, a message routing device is provided, which is applied to a visited public land mobile network security edge protection proxy (VSEPP), including: a first receiving module, configured to receive a service request message and a first routing parameter sent by a first network function (NF), where the first routing parameter carries a network repository function (NRF) discovery parameter and a user identifier, and the first NF resides in a visited public land mobile network (VPLMN); and a routing module, configured to route the service request message and the NRF discovery parameter to a home public land mobile network security edge protection proxy (HSEPP) according to the user identifier, so that the HSEPP routes the service request message to a second NF according to the NRF discovery parameter, where the second NF resides in a home public land mobile network (HPLMN).

According to another embodiment of the present disclosure, another message routing device is provided, which is applied to a home public land mobile network security edge protection proxy (HSEPP), including: a first receiving module, configured to receive a service request message and a second routing parameter routed by a visited public land mobile network security edge protection proxy (VSEPP); a routing module, configured to route the service request message to a second network function (NF) according to the second routing parameter, where the second NF resides in a home public land mobile network (HPLMN); a second receiving module, configured to receive a response message returned by the second NF based on the service request message; and a sending module, configured to send the response message to the VSEPP.

According to still another embodiment of the present disclosure, a message routing system is provided, including: a visited public land mobile network security edge protection proxy (VSEPP); and a home public land mobile network security edge protection proxy (HSEPP), where the VSEPP includes the device as described above, and the HSEPP includes the device as described above.

According to still another embodiment of the present disclosure, a computer-readable storage medium storing a computer program is provided, and the computer program is configured to perform the method as described above when executed.

According to still another embodiment of the present disclosure, an electronic device is provided, including: a memory; and a processor, the memory stores a computer program, and the processor is configured to run the computer program to perform the method as described above.

### BRIEF DESCRIPTION OF THE DRAWINGS

The drawings described herein are to provide further understanding of the present disclosure and constitute a part of the present disclosure. The schematic embodiments of the present disclosure and their descriptions are to explain the present disclosure and do not constitute improper limitations on the present disclosure. In the drawings:
FIG. 1 is a flowchart of interaction between PLMNs in the related art of the present disclosure;
FIG. 2 is a hardware structure block diagram of a server for routing a message of the present disclosure;
FIG. 3 is a flowchart of a message routing method according to the present disclosure;
FIG. 4 is a network architecture diagram of the application of the present disclosure;
FIG. 5 is a network architecture diagram of PLMN in the present disclosure;
FIG. 6 is a flowchart of another message routing method according to the present disclosure;
FIG. 7 is an interaction diagram of AMF of VPLMN accessing UDM of HPLMN in the present disclosure;
FIG. 8 is a structural block diagram of a message routing device according to the present disclosure;
FIG. 9 is a structural block diagram of another message routing device according to the present disclosure; and
FIG. 10 is a structural block diagram of a message routing system according to the present disclosure.

### DETAILED DESCRIPTION OF THE EMBODIMENTS

The present disclosure will be described in detail below with reference to the accompanying drawings and in combination with the embodiments. It should be noted that the embodiments and features in the embodiments of the present disclosure can be combined with each other without conflict.

It should be noted that the terms "first", "second", etc. in the specification and claims of the present disclosure and the above-mentioned drawings are used to distinguish similar objects, and are not necessarily used to describe a specific order or sequence.

In some cases, SEPP acts as a security edge protection proxy for PLMN and is responsible for forwarding control plane signaling for interaction between PLMNs. Taking a typical Visited Public Land Mobile Network (VPLMN) AMF network element accessing the UDM network element in the Home Public Land Mobile Network (HPLMN) as an example. FIG. 1 is a flowchart of interaction between PLMNs in the related art of the present disclosure. It can be seen from the interaction flow in FIG. 1 that in some cases, there is a signaling detour from VPLMN to HPLMN, resulting in a large service processing delay. Since the response messages for service discovery are relatively large, the bandwidth resources required between VPLMN and HPLMN are high. The AMF in the VPLMN needs to subscribe to the status of the UDM of the HPLMN, and the status change notification of the UDM needs to be sent across the VPLMN. There is a high probability that the notification is unreachable and affects the service.

### First embodiment

The method embodiment provided in the first embodiment of the present disclosure can be executed in a base station, a server, a base station controller or a similar network element. Taking running on a server as an example, FIG. 1 is a hardware structure block diagram of a server for routing a message of the present disclosure. As shown in FIG. 1, the server can include one or more (only one is shown in FIG. 1) processors 102 (the processor 102 can include but is not limited to a processing device such as a microprocessor MCU or a programmable logic device FPGA) and a memory 104 for storing data. In an exemplary embodiment, the server can also include a transmission device 106 for communication functions and an input/output device 108. It can be understood by a person skilled in the art that the structure shown in FIG. 1 is only for illustration and does not limit the structure of the server. For example, the server can also include more or fewer components than those shown in FIG. 1, or have a configuration different from that shown in FIG. 1.

The memory 104 can store computer programs, for example, software programs and modules of application software, such as the computer program corresponding to the message routing method in the present disclosure. The processor 102 executes various functional applications and data processing by running the computer program stored in the memory 104, that is, to implement the above method. The memory 104 can include a high-speed random access memory, and can also include a non-volatile memory, such as one or more magnetic storage devices, flash memory, or other non-volatile solid-state memory. In some instances, the memory 104 can further include a memory remotely arranged relative to the processor 102, and these remote memories can be connected to the server via a network. Examples of the above-mentioned network include, but are not limited to, the Internet, an intranet, a local area network, a mobile communication network, and combinations thereof.

The transmission device 106 is configured to receive or send data via a network. The specific example of the above network can include a wireless network provided by a communication provider of the server. In one example, the transmission device 106 includes a network adapter (Network Interface Controller, referred to as NIC), which can be connected to other network devices through the server to communicate with the Internet. In one example, the transmission device 106 can be a radio frequency (RF) module, which is used to communicate with the Internet wirelessly.

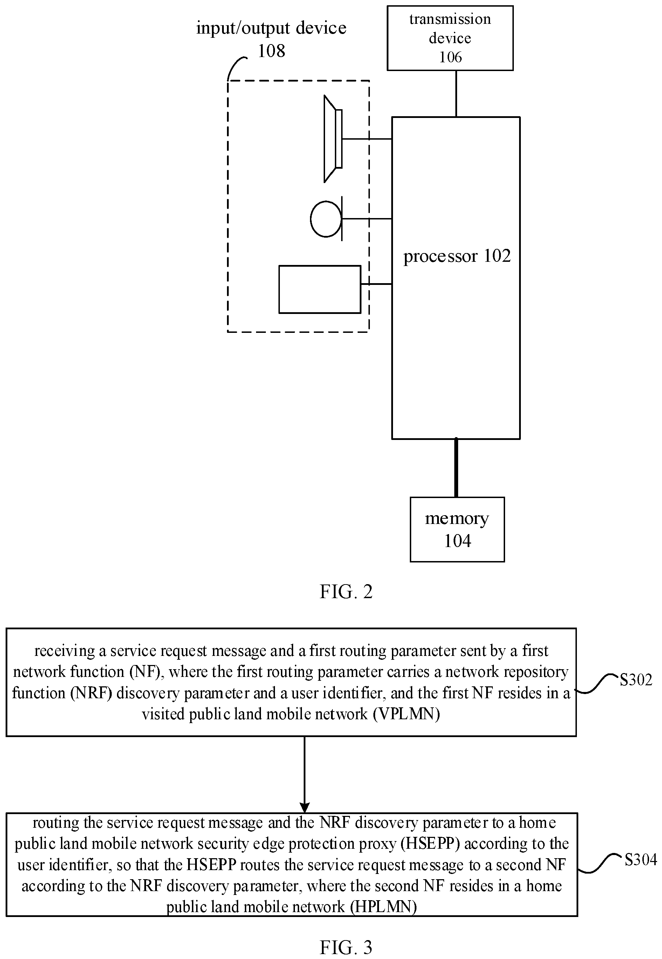

This embodiment provides a message routing method. FIG. 3 is a flowchart of a message routing method according to the present disclosure. As shown in FIG. 3, the method is applied to Visited Public Land Mobile Network Security Edge Protection Proxy (VSEPP), and includes the following steps:

Step S302, receiving a service request message and a first routing parameter sent by a first network function (NF), where the first routing parameter carries a network repository function (NRF) discovery parameter and a user identifier, and the first NF resides in a visited public land mobile network (VPLMN).

In an exemplary embodiment, the user identifier can be a SUPI (Subscription Permanent Identifier). The first NF is connected to a user equipment (UE). When the UE initiates a service request to the first NF, it carries its own SUPI.

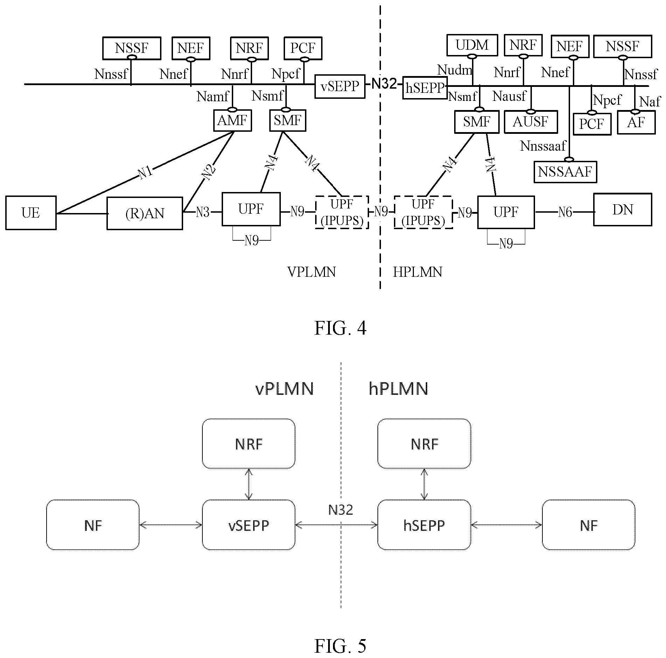

FIG. 4 is a network architecture diagram applied in the present disclosure, in which messages roam between the VPLMN and HPLMN networks. VPLMN includes AMF, Session Management Function (SMF), Access Network (AN), Radio Access Network (RAN), User Plane Function (UPF), Network Slice Selection Function (NSSF), Network Exposure Function (NEF), NF Repository Function (NRF), Policy Control Function (PCF), VSEPP, and other network elements. HPLMN includes UDM, NRF, NEF, NSSF, HSEPP, SMF, Authentication Server Function (AUSF), PCF, Application Function (AF), Network Slice-Specific Authentication and Authorization Function (NSSAAF), UPF, Data network (DN), such as operator services, Internet access and third-party services) and other network elements.

Step S304, routing the service request message and the NRF discovery parameter to a home public land mobile network security edge protection proxy (HSEPP) according to the user identifier, so that the HSEPP routes the service request message to a second NF according to the NRF discovery parameter, where the second NF resides in a home public land mobile network (HPLMN).

The first NF of this embodiment is a network element other than VSEEP in VPLMN that can initiate service requests, such as AMF, etc., and the second NF is a network element other than HSEEP in HPLMN that can process service requests, such as UDM, etc. FIG. 5 is a network architecture diagram of PLMN in the present disclosure, including the first NF and the second NF, which are the network element initiating service access in VPLMN and the network element responding to service access in HPLMN, respectively. vSEPP is the SEPP network element in VPLMN network, and hSEPP is the SEPP network element in HPLMN network.

Through the above steps, the service request message and the first routing parameter sent by the first network function (NF) are received, the first routing parameter carries the network repository function (NRF) discovery parameter and the user identifier, and the first NF resides in the visited public land mobile network (VPLMN); and the service request message and the NRF discovery parameter are routed to the home public land mobile network security edge protection proxy (HSEPP) according to the user identifier, so that the HSEPP routes the service request message to the second NF according to the NRF discovery parameter, and the second NF resides in the home public land mobile network (HPLMN). VSEPP no longer executes the discovery request of the second NF, but directly routes the discovery parameters of the network repository function NRF to HSEPP, which executes the discovery request and routes the service request message, reducing the detour of the message between PLMNs, which solves the technical problem of the detour of interactive signaling between PLMNs in the related art, reduces the number of signaling interactions during service processing, and reduces processing delay and network resource overhead.

In this embodiment, after routing the service request message and the NRF discovery parameter to the home public land mobile network security edge protection proxy (HSEPP) according to the user identifier, the method further includes: receiving a response message from the second NF returned by the HSEPP, where the response message is a response message generated by the second NF after receiving the service request message and completing service processing; and sending the response message to the first NF.

In an exemplary embodiment, the first NF directly sends an HTTP2 Service Request message to the VPLMN SEPP in the VPLMN network for inter-PLMN message routing, carrying an NRF Discovery parameter. The receiving the service request message and the first routing parameter sent by the first NF includes: receiving the HTTP2 Service Request message sent by the first NF. The service request message includes an HTTP2 Service Request message, and the HTTP2 Service Request message carries the first routing parameter.

In one example, the HTTP2 Service Request message carries the following first routing parameters: subscription permanent identifier (SUPI) of visited UE, authorization identifier, and NRF discovery identifier, the authorization identifier is configured to indicate a fully qualified domain name (FQDN) or an IP address of the VSEPP that interacts with the HPLMN to which the subscription permanent identifier (SUPI) belongs, and the NRF discovery identifier is configured to indicate a discovery parameter required by the first NF to discover the second NF.

The first NF needs to interact with the second NF. The first NF determines that the user belongs to the HPLMN based on the user SUPI identifier. The first NF encapsulates the HTTP request message, which contains at least the following routing parameters: Authority (authorization identifier) = FQDN or IP address of the SEPP in the VPLMN used to interact with the HPLMN to which the user SUPI belongs. 3gpp-Sbi-Discovery-* = * (NRF discovery identifier), where * is a general term, carrying the discovery parameters required by AMF to discover UDM.

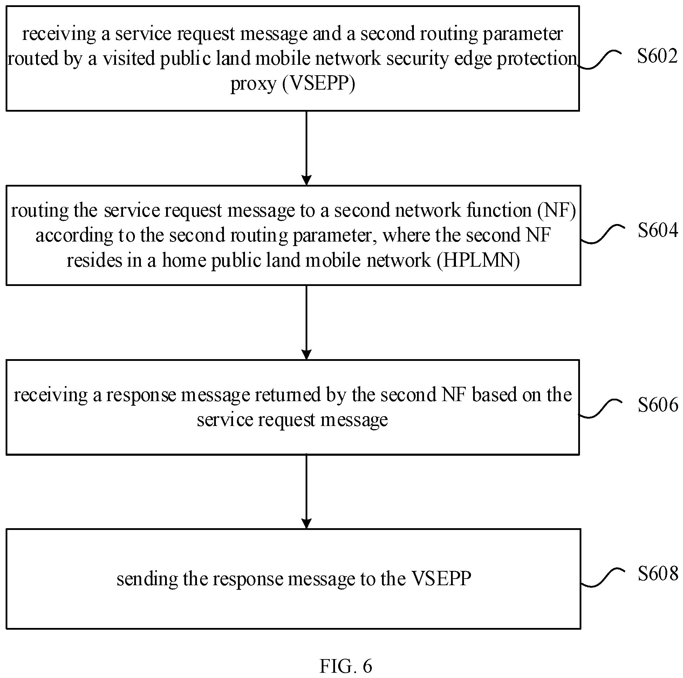

This embodiment provides another message routing method. FIG. 6 is a flowchart of another message routing method according to the present disclosure, which is applied to HSEPP. As shown in FIG. 6, the method includes the following steps S602 to S608.

Step S602, receiving a service request message and a second routing parameter routed by a visited public land mobile network security edge protection proxy (VSEPP).

In one example, the second routing parameter includes the FQDN or IP address of the HSEPP and the network repository function (NRF) discovery parameter carried in the first routing parameter.

Step S604, routing the service request message to a second network function (NF) according to the second routing parameter, where the second NF resides in a home public land mobile network (HPLMN).

Step S606, receiving a response message returned by the second NF based on the service request message.

Step S608, sending the response message to the VSEPP.

In an embodiment, the routing the service request message to the second network function (NF) according to the second routing parameter includes: S11, creating a discovery request message by using the second routing parameter, where the second routing parameter carries the following parameters: a network repository function (NRF) discovery parameter, a fully qualified domain name (FQDN) or an IP address of the NRF in the HPLMN; S12, sending the request message to the NRF in the HPLMN; and S13, routing the service request message to the second NF according to a discovery result returned by the NRF.

In an embodiment, the routing the service request message to the second NF according to the discovery result returned by the NRF includes: receiving several second NF identifiers returned by the NRF based on the request message; and selecting a target second NF from the several second NF identifiers, and sending the service request message to the target second NF.

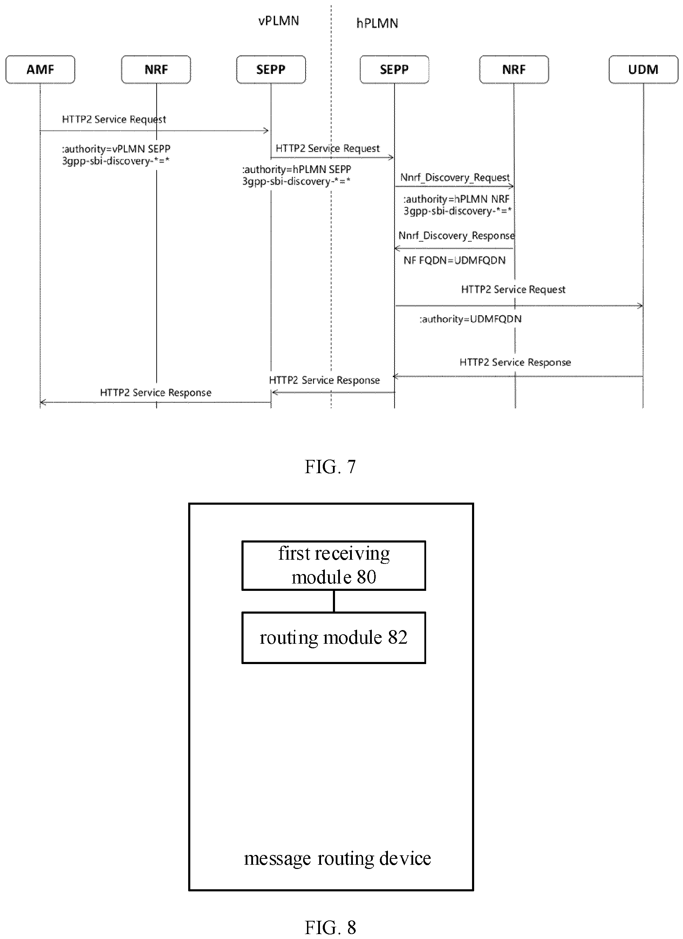

The following takes the first NF as AMF and the second NF as UDM as an example to explain and describe the solution of this embodiment in detail. FIG. 7 is an interaction diagram of the AMF of the VPLMN accessing the UDM of the HPLMN in the present disclosure, which includes the following steps.

Step 1, AMF needs to interact with UDM, AMF determines that the user belongs to HPLMN based on the user SUPI identifier, AMF encapsulates HTTP2 request message. HTTP request message contains at least the following routing parameters: :authority=FQDN or IP address of VSEPP in VPLMN used to interact with HPLMN to which user SUPI belongs; 3gpp-Sbi-Discovery-*=*, where * is a general term, carrying the discovery parameters required by AMF to discover UDM; AMF sends the message to SEPP (VSEPP, i.e. VPLMN SEPP) in the pre-configured VPLMN used to interact with HPLMN to which user SUPI belongs.

Step 2, VPLMN SEPP receives the HTTP2 request message sent by the AMF, reads the user ID, obtains the SEPP information of the HPLMN to which the user SUPI belongs according to the routing policy information, and encapsulates the HTTP2 request message. The HTTP2 request message contains at least the following routing parameters: :authority=FQDN or IP address of the SEPP in the HPLMN; 3gpp-Sbi-Discovery-*=*, where * is a general term, and forwards the parameters carried by the AMF as is.

Step 3, hSEPP receives the service request sent by vSEPP, obtains 3gpp-Sbi-Discovery-* related parameters from the request, and encapsulates the NRF discovery request. The NRF discovery request contains at least the following parameters: :authority=FQDN or IP address of NRF in HPLMN; fill in service discovery related parameters according to the 3gpp-Sbi-Discovery-* parameters carried by vSEPP; hSEPP sends the NRF discovery request to NRF in HPLMN.

Step 4, HPLMN NRF returns the result of UDM discovery, which contains at least the FQDN or IP address of the available UDM NF.

Step 5, hSEPP receives the result of UDM discovery returned by NRF, selects a UDM from 1 to multiple UDM NFs, and sends the service request received in step 3 to the selected UDM, including the following parameters: :authority=UDM's FQDN or IP address; indicates to delete the relevant 3gpp-Sbi-Discovery-* parameters.

Step 6, UDM receives the request message, completes the service processing, and returns the response message to hSEPP in the original path.

Step 7, hSEPP returns the response message to vSEPP in the original path.

Step 8, vSEPP returns the response message to AMF in the original path.

Step 9, End.

With the solution of this embodiment, VPLMN NF no longer performs discovery in the inter-PLMN signaling, but directly sends it to the SEPP, carrying the NRF Discovery parameter. The VPLMN routes the message to the HPLMN SEPP according to the user identifier in the signaling, the HPLMN obtains the NRF Discovery parameter from the signaling, sends it to the NRF to perform service discovery, obtains the target NF from the result of the service discovery, and forwards the message to the target NF.

The solution of this embodiment optimizes the process in the related art, reduces the number of signaling interactions, changes the signaling interaction from 2 times to 1 time across PLMNs, improves network efficiency, and there is no signaling detour in the signaling interaction between PLMNs, and the delay is small. There is no need to transmit NRF service discovery results between PLMNs. Since the NRF service discovery result message is relatively large, the solution of this embodiment also reduces the bandwidth requirement.

Through the description of the above implementation methods, those skilled in the art can clearly understand that the method according to the above embodiment can be implemented by means of software plus a necessary general hardware platform, and of course by hardware, but in many cases the former is a better implementation method. Based on this understanding, the technical solution of the present disclosure, or the part that contributes to the prior art, can be embodied in the form of a software product. The computer software product is stored in a storage medium (such as ROM/RAM, disk, CD), and includes several instructions to enable a terminal device (which can be a mobile phone, computer, server, or network device, etc.) to execute the methods described in various embodiments of the present disclosure.

### Second embodiment

This embodiment further provides a message routing device and a message routing system. The device is to implement the above-mentioned embodiments and preferred implementations, and the descriptions have been made and will not be repeated. As used below, the term "module" can implement a combination of software and/or hardware for a predetermined function. Although the device described in the following embodiments is preferably implemented in software, the implementation of hardware, or a combination of software and hardware, is also possible and conceived.

FIG. 8 is a structural block diagram of a message routing device according to the present disclosure. As shown in FIG. 8, the device is applied to a visited public land mobile network security edge protection proxy (VSEPP). The device includes: a first receiving module 80 and a routing module 82.

The first receiving module 80 is configured to receive a service request message and a first routing parameter sent by a first network function (NF), the first routing parameter carries a network repository function (NRF) discovery parameter and a user identifier, and the first NF resides in a visited public land mobile network (VPLMN).

The routing module 82 is configured to route the service request message and the NRF discovery parameter to a home public land mobile network security edge protection proxy (HSEPP) according to the user identifier, so that the HSEPP routes the service request message to a second NF according to the NRF discovery parameter, the second NF resides in a home public land mobile network (HPLMN).

In an exemplary embodiment, the device further includes: a second receiving module and a sending module. The second receiving module is configured to receive a response message from the second NF returned by the HSEPP after the routing module routes the service request message and the NRF discovery parameter to the home public land mobile network security edge protection proxy (HSEPP) according to the user identifier, the response message is a response message generated by the second NF after receiving the service request message and completing service processing. The sending module is configured to send the response message to the first NF.

In an exemplary embodiment, the first receiving module includes a receiving unit configured to receive an HTTP2 Service Request message sent by the first NF, the service request message includes the HTTP2 Service Request message, and the HTTP2 Service Request message carries the first routing parameter.

In an exemplary embodiment, the HTTP2 Service Request message carries the following first routing parameters: subscription permanent identifier (SUPI) of visited UE, authorization identifier, and NRF discovery identifier, the authorization identifier is configured to indicate a fully qualified domain name (FQDN) or an IP address of the VSEPP that interacts with the HPLMN to which the subscription permanent identifier (SUPI) belongs, and the NRF discovery identifier is configured to indicate a discovery parameter required by the first NF to discover the second NF.

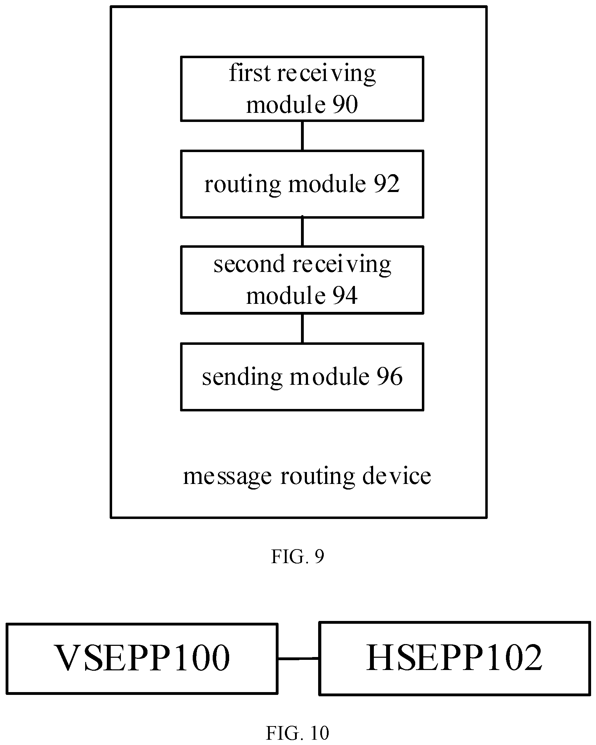

FIG. 9 is a structural block diagram of another message routing device according to the present disclosure. As shown in FIG. 9, the device is applied to a home public land mobile network security edge protection proxy (HSEPP), and the device includes a first receiving module 90, a routing module 92, a second receiving module 94 and a sending module 96.

The first receiving module 90 is configured to receive a service request message and a second routing parameter routed by a visited public land mobile network security edge protection proxy (VSEPP).

The routing module 92 is configured to route the service request message to a second network function (NF) according to the second routing parameter, the second NF resides in a home public land mobile network (HPLMN).

The second receiving module 94 is configured to receive a response message returned by the second NF based on the service request message.

The sending module 96 is configured to send the response message to the VSEPP.

In an exemplary embodiment, the routing module includes a creating unit, a sending unit and a routing unit. The creating unit is configured to create a discovery request message by using the second routing parameter, the second routing parameter carries the following parameters: a network repository function (NRF) discovery parameter, a fully qualified domain name (FQDN) or an IP address of the NRF in the HPLMN. The sending unit is configured to send the request message to the NRF in the HPLMN. The routing unit is configured to route the service request message to the second NF according to a discovery result returned by the NRF.

In an exemplary embodiment, the routing unit includes a receiving sub-unit and a sending sub-unit. The receiving sub-unit is configured to receive several second NF identifiers returned by the NRF based on the request message, and the sending sub-unit is configured to select a target second NF from the several second NF identifiers, and send the service request message to the target second NF.

According to another embodiment of the present disclosure, a message routing system is further provided, including a visited public land mobile network security edge protection proxy (VSEPP) and a home public land mobile network security edge protection proxy (HSEPP). The VSEPP includes the device as described in the above embodiments, and the HSEPP includes the device as described in the above embodiments.

FIG. 10 is a structural block diagram of a message routing system according to the present disclosure. As shown in FIG. 10, the system includes VSEPP100 and HSEPP102, VSEPP100 includes the device as described in the above embodiments, and the HSEPP102 includes the device as described in the above embodiments.

It should be noted that the above modules can be implemented by software or hardware. For the latter, it can be implemented in the following ways, but not limited to: the above modules are all located in the same processor; or the above modules are located in different processors in any combination.

### Third embodiment

The embodiment of the present disclosure further provides a computer-readable storage medium, in which a computer program is stored, and the computer program is configured to execute the steps of any of the above method embodiments when running.

In an exemplary embodiment, the computer-readable storage medium is configured to store a computer program for performing the following steps: S1, receiving a service request message and a first routing parameter sent by a first network function (NF), where the first routing parameter carries a network repository function (NRF) discovery parameter and a user identifier, and the first NF resides in a visited public land mobile network (VPLMN); and S2, routing the service request message and the NRF discovery parameter to a home public land mobile network security edge protection proxy (HSEPP) according to the user identifier, so that the HSEPP routes the service request message to a second NF according to the NRF discovery parameter, where the second NF resides in a home public land mobile network (HPLMN).

In an exemplary embodiment, the computer-readable storage medium may include, but is not limited to, various media that can store computer programs, such as a USB flash drive, a read-only memory (ROM), a random access memory (RAM), a mobile hard disk, a magnetic disk or an optical disk.

The embodiment of the present disclosure also provides an electronic device, including a memory and a processor, a computer program is stored in the memory, and the processor is configured to run the computer program to execute the steps in any of the above method embodiments.

In an exemplary embodiment, the above electronic device can also include a transmission device and an input/output device, the transmission device is connected to the above processor, and the input/output device is connected to the above processor.

In an exemplary embodiment, the processor is configured to perform the following steps via a computer program: S1, receiving a service request message and a first routing parameter sent by a first network function (NF), where the first routing parameter carries a network repository function (NRF) discovery parameter and a user identifier, and the first NF resides in a visited public land mobile network (VPLMN); and S2, routing the service request message and the NRF discovery parameter to a home public land mobile network security edge protection proxy (HSEPP) according to the user identifier, so that the HSEPP routes the service request message to a second NF according to the NRF discovery parameter, where the second NF resides in a home public land mobile network (HPLMN).

In an exemplary embodiment, for specific examples in this embodiment, reference may be made to the examples described in the above embodiments and optional implementation modes, and this embodiment will not be described in detail here.

Through the present disclosure, the service request message and the first routing parameter sent by the first network function (NF) are received, the first routing parameter carries the network repository function (NRF) discovery parameter and the user identifier, and the first NF resides in the visited public land mobile network (VPLMN); and the service request message and the NRF discovery parameter are routed to the home public land mobile network security edge protection proxy (HSEPP) according to the user identifier, so that the HSEPP routes the service request message to the second NF according to the NRF discovery parameter, and the second NF resides in the home public land mobile network (HPLMN). VSEPP no longer executes the discovery request of the second NF, but directly routes the discovery parameters of the network repository function NRF to HSEPP, which executes the discovery request and routes the service request message, reducing the detour of the message between PLMNs, which solves the technical problem of the detour of interactive signaling between PLMNs in the related art, reduces the number of signaling interactions during service processing, and reduces processing delay and network resource overhead.

Obviously, those skilled in the art should understand that the above modules or steps of the present disclosure can be implemented by a general computing device. They can be concentrated on a single computing device or distributed on a network composed of multiple computing devices. In an exemplary embodiment, they can be implemented by a program code executable by a computing device, so that they can be stored in a storage device and executed by the computing device. In some cases, the steps shown or described may be performed in a different order than that shown here, or they may be made into individual integrated circuit modules, or multiple modules or steps therein may be made into a single integrated circuit module to implement. Thus, the present disclosure is not limited to any particular combination of hardware and software.

The above description is only a preferred embodiment of the present disclosure and is not intended to limit the present disclosure. For those skilled in the art, the present disclosure may have various modifications and variations. Any modification, equivalent replacement, improvement, etc. made within the principles of the present disclosure shall be included in the scope of the present disclosure.

## Claims

1. A message routing method, applied to a visited public land mobile network security edge protection proxy, VSEPP, comprising:
receiving a service request message and a first routing parameter sent by a first network function, NF, wherein the first routing parameter carries a network repository function, NRF, discovery parameter and a user identifier, and the first NF resides in a visited public land mobile network, VPLMN; and
routing the service request message and the NRF discovery parameter to a home public land mobile network security edge protection proxy, HSEPP, according to the user identifier, so that the HSEPP routes the service request message to a second NF according to the NRF discovery parameter, wherein the second NF resides in a home public land mobile network, HPLMN.

2. The method according to claim 1, wherein after routing the service request message and the NRF discovery parameter to the home public land mobile network security edge protection proxy, HSEPP, according to the user identifier, the method further comprises:
receiving a response message from the second NF returned by the HSEPP, wherein the response message is a response message generated by the second NF after receiving the service request message and completing service processing; and
sending the response message to the first NF.

3. The method according to claim 1, wherein the receiving the service request message and the first routing parameter sent by the first network function, NF, comprises:
receiving an HTTP2 Service Request message sent by the first NF, wherein the service request message comprises the HTTP2 Service Request message, and the HTTP2 Service Request message carries the first routing parameter.

4. The method according to claim 3, wherein the HTTP2 Service Request message carries the following first routing parameters: subscription permanent identifier, SUPI, of visited UE, authorization identifier, and NRF discovery identifier, the authorization identifier is configured to indicate a fully qualified domain name, FQDN, or an IP address of the VSEPP that interacts with the HPLMN to which the subscription permanent identifier, SUPI, belongs, and the NRF discovery identifier is configured to indicate a discovery parameter required by the first NF to discover the second NF.

5. A message routing method, applied to a home public land mobile network security edge protection proxy, HSEPP, comprising:
receiving a service request message and a second routing parameter routed by a visited public land mobile network security edge protection proxy, VSEPP;
routing the service request message to a second network function, NF, according to the second routing parameter, wherein the second NF resides in a home public land mobile network, HPLMN;
receiving a response message returned by the second NF based on the service request message; and
sending the response message to the VSEPP.

6. The method according to claim 5, wherein the routing the service request message to the second network function, NF, according to the second routing parameter comprises:
creating a discovery request message by using the second routing parameter, wherein the second routing parameter carries the following parameters: a network repository function, NRF, discovery parameter, a fully qualified domain name, FQDN, or an IP address of the NRF in the HPLMN;
sending the request message to the NRF in the HPLMN; and
routing the service request message to the second NF according to a discovery result returned by the NRF.

7. The method according to claim 6, wherein the routing the service request message to the second NF according to the discovery result returned by the NRF comprises:
receiving several second NF identifiers returned by the NRF based on the request message; and
selecting a target second NF from the several second NF identifiers, and sending the service request message to the target second NF.

8. A message routing device, applied to a visited public land mobile network security edge protection proxy, VSEPP, comprising:
a first receiving module, configured to receive a service request message and a first routing parameter sent by a first network function, NF, wherein the first routing parameter carries a network repository function, NRF, discovery parameter and a user identifier, and the first NF resides in a visited public land mobile network, VPLMN; and
a routing module, configured to route the service request message and the NRF discovery parameter to a home public land mobile network security edge protection proxy, HSEPP, according to the user identifier, so that the HSEPP routes the service request message to a second NF according to the NRF discovery parameter, wherein the second NF resides in a home public land mobile network, HPLMN.

9. A message routing device, applied to a home public land mobile network security edge protection proxy, HSEPP, comprising:
a first receiving module, configured to receive a service request message and a second routing parameter routed by a visited public land mobile network security edge protection proxy, VSEPP;
a routing module, configured to route the service request message to a second network function, NF, according to the second routing parameter, wherein the second NF resides in a home public land mobile network, HPLMN;
a second receiving module, configured to receive a response message returned by the second NF based on the service request message; and
a sending module, configured to send the response message to the VSEPP.

10. A message routing system, comprising:
a visited public land mobile network security edge protection proxy, VSEPP; and
a home public land mobile network security edge protection proxy, HSEPP,
wherein the VSEPP comprises the device according to claim 8, and the HSEPP comprises the device according to claim 9.

11. A computer-readable storage medium storing a computer program, wherein the computer program is configured to perform the method according to any one of claims 1 to 7 when executed.

12. An electronic device, comprising:
a memory; and
a processor,
wherein the memory stores a computer program, and the processor is configured to run the computer program to perform the method according to any one of claims 1 to 7.
